# EUROPEAN PATENT SPECIFICATION

(11) **EP 1 468 820 B1**
(45) Date of publication and mention of the grant of the patent: **31.10.2007**
(21) Application number: 03425173.6
(22) Date of filing: 19.03.2003
(51) Int. Cl.: B32B 27/28, B29C 47/90, B29C 44/50, B29C 47/88, C08J 9/14, C08J 9/34

(54) **A method for producing an expanded polystyrene sheet for a tray containing food products which can release liquids and a tray obtained from said sheet**
Methode zur Herstellung einer ausgedehnten Polystyrolplatte für eine Lebensmittelprodukte enthaltende Verpackungsschale welche Flüssigkeiten austreten lassen kann sowie eine Verpackungsschale aus einer solchen Platte hergestellt
Procédé de production d'une tole de polystyrène expansé pour un plateau avec libération de liquides et plateau obtenu de cette tole

(43) Date of publication of application: 20.10.2004
(73) Proprietor: COOPBOX Eastern sro, 915 01 Nove Mesto Nad Vahom (SK)
(72) Inventor: Movilli, Walter, 42100 Reggio Emilia (IT)

(56) References cited:
- EP-A- 0 090 507
- EP-A- 0 642 907
- EP-A- 0 754 632
- EP-A- 0 849 309
- DE-A- 10 021 728

## Description

### Field of Application

In general, this invention relates to the packaging of food products which can release blood or other liquids, such as for example meat and fish.

In particular, the present invention relates to a method for producing an expanded polystyrene sheet having a high capacity of absorbing blood or other liquids released by food products, in particular watery liquids.

The present invention also relates to a tray for food products which can release blood or other liquids obtained from said expanded polystyrene sheet.

### Prior Art

In the field of packaging for food products which can release blood or other watery liquids, such as for example meat and fish, there is a need of providing packages able to isolate and hide liquids released by food products during their conservation.

In fact, these liquids usually stay on the bottom of the tray together with the food product they come from, thus negatively affecting conservation. Moreover the consumer often dislikes seeing these liquids inside the package.

Among prior art solutions to such a problem, the use of a tray made of expanded plastic material, usually polystyrene, having an essentially open cell structure, is the most advantageous one.

The open cell structure of the expanded polystyrene has a series of capillary channels putting in communication single cells and allowing them to receive and hold back the liquid released by the food product laid on the bottom of the tray.

So, the liquid is held by the cells basically acting like sponges and, because of the strong capillary interactions among the channels and the liquids, it cannot go back to the bottom of the tray even if the tray is leant or turned down.

The methods for producing expanded polystyrene trays having an open cell structure comprise the first step of making the expanded polystyrene sheet and then that of making the tray by thermoforming of the expanded polystyrene sheet, which could be previously coupled to a reinforcing film.

Generally, in prior art, the making of an expanded polystyrene sheet, first implies the making of a mixture comprising polystyrene and some additives such as a nucleant agent and a surfactant.

The mixture is homogenised inside an extruder, an expanding agent is added and the mixture is melted through heating at a temperature over 200°C.

Then the mixture is cooled down in an end portion of the extruder and extruded so as to obtain an expanded tube-shaped polystyrene.

The expanded tube-shaped polystyrene is then cooled down, sized on a proper mandrel, cut along one or two generators, open and laid like a sheet-shape.

It is known that in the field of the expanded polystyrene sheet production, the structure and mechanical characteristics of the expanded polystyrene are strongly influenced by the operating conditions employed for the extrusion. In the Patent Application EP 965426, in which a method for producing expanded polystyrene trays is disclosed, the extrusion of the polystyrene is carried out at high temperatures and under high draft condition of the material leaving the extruder. In such a way and expanded polystyrene sheet with an open and deformed cell structure having good liquid absorbing characteristics but scarce mechanical resistance characteristics is obtained. In fact, if the expanded polystyrene sheet has to be used for producing trays, it has to be necessarily coupled to a reinforcing films on both the surfaces, thus obtaining a laminate from which, through thermoforming, the tray is produced.

Instead, by using lower extrusion temperature and by drawing less the material leaving the extruder, the mechanical characteristics of the expanded polystyrene sheet improve but its structure tends to have a higher proportion of close cells with a subsequent reduction of the capacity of liquid absorption.

The technical problem underlying this invention is that of providing a method for producing an expanded polystyrene sheet comprising an open cell structure overcoming the previously quoted drawbacks with reference to the prior art.

EP 0090507 discloses a thermoformed container having a hot food receiving region and a cover region. The container is composed of two layers, namely a inner layer of expanded polymer (such as polystyrene) having an open cells structure and a outer layer of expanded polymer having a closed cell structure. Such layers are coupled together by co-extrusion, lamination or bonding so obtaining a composite which, in turn, is thermoformed to produce the container.

### Summary of the invention

Such a technical problem is solved by a method for producing an expanded polystyrene sheet for trays containing food products which can release liquids, the method comprising the steps of:
■ forming a mixture comprising polystyrene, a nucleating agent and a surfactant,
■ homogenising and melting said mixture in an extruder through heating at a temperature higher than 200°C and adding an expanding agent to the homogenised, melted mixture,
■ cooling down the mixture at a temperature between 140 and 160°C in an end portion of the extruder,
■ extruding the mixture through an opening of the extruder in such a way as to obtain a tubular and start the expansion of the polystyrene,
■ calibrating said tubular sliding thereof on a mandrel,
■ cutting said tubular in such a way as to obtain an expanded polystyrene sheet,
characterized in that said tubular is cooled down on its external side downstream the extrusion opening and when the expansion of the polystyrene has begun, so forming a surface portion of prefixed thickness having closed cells.

Preferably, the cooling down of the tubular downstream the extrusion opening is carried out through contact of the external side with a ring-like element concentrically arranged with the extrusion opening and kept at a temperature between 20 and 40°C.

According to another aspect of the present invention, the above referred method is also characterised in that, during the calibrating step, the dimensions of the mandrel are chosen so that the ratio between the diameter of the mandrel and the diameter of the extruder opening is comprised between 4,3 and 4,4.

In the method according to this invention, the nucleating agent is of the conventional type and has the main function of regulating the dimensions of the cells inside the expanded polystyrene. The nucleating agents are generally added to the base mixture in an amount of 0,2 to 1% by weight on the weight of the mixture. Preferably, nucleating agents are chosen from the group comprising talc and mixtures of citric acid and sodium bicarbonate.

The surfactant has instead the function of making the polystyrene hydrophilic and thus improving its liquid absorbing characteristics, allowing liquids to seep into the cell structure.

The surfactants can be chosen among cationic, anionic and non ionic ones of common use. Preferably, salts of sulphonic acids are used and in particular sodium alkyl sulphonates (C₁₀-C₁₈) are useful.

The mixture can also comprise an inert material to easy the breaking of the cell walls during expansion of the polystyrene and thus obtaining an open cell structure as it will be better explained throughout the present description.

Preferably, the inert material is made of glass microspheres having particle size between 10 and 60 micron. However any inert material suitable for the above mentioned aim can be conveniently used.

A mineral oil can also be added to the mixture, in a sufficient amount so as to perform as a binder of the various ingredients of the mixture. Generally, such an amount is between 0,1 and 2% by weight on the weight of the mixture.

The expanding agent is generally added to the mixture in an amount ranging from 3 to 6% by weight on the weight of the mixture. The expanding agent not only allows to obtain a cell structure inside the final expanded polystyrene sheet but also influences its density, the density decreasing when the content of expanding agent added to the mixture in the extruder increases.

The expanding agent is of the known type and is preferably chosen among aliphatic hydrocarbons with 3-6 carbon atoms and their mixtures. Preferably, the expanding agent is n-butane or a mixture of n-butane, isobutane and propane.

The present invention is based on the fact that by cooling down the tubular on the external side just after it has been extruded and when the expansion of the polystyrene has started, at the end of all the process an expanded polystyrene sheet is obtained, this sheet having good liquid absorbing characteristics and fairly good mechanical resistance.

In particular, such an expanded polystyrene sheet is characterised in that it has a surface portion of prefixed thickness (between 0,7 and 2mm) wherein the expanded structure is essentially with closed cells and a remaining portion having major thickness wherein the expanded structure is essentially with open and deformed cells.

Without being bound to any scientific theory, it is thought that the above specified expanded polystyrene sheet structure is obtained as follows.

When the mixture is extruded from the extruder opening or die in a tubular shape, the expanding gas therein dissolved gets free thus forming an enormous number of bubbles that dilate until they form a foam having cells marked by thin walls of plastic material. This starts the expansion of the polystyrene.

During expansion the tubular undergoes cooling down on the external side, in this way the expanding gas dilatation is here relieved and the cell growth is inhibited by the increased viscosity of the material. Cells formed on the external part of the tubular will thus have smaller dimensions and thicker walls if compared to the cells formed inside the tubular, these latter being free to expand.

So, during expansion, the walls of cells inside the tubular will thin down to break themselves, thus creating an open cell structure. This does not happen for the cells of the external part of the tubular, as a result they stay close.

Cell opening inside the tubular is made easier if inert material is used because this will have larger dimensions if compared to cell walls, so provoking the perforation of the cell walls. On the other hand, in the external part of the tubular, the inert material will have smaller dimensions than the cell wall thickness and as a consequence it stays embedded inside the walls without perforating them.

It is to be noticed that cooling down, according to the invention, implies formation, in the external part of the tubular, of a continuous layer whose thickness is firm and wherein cells are close and have relatively thick walls. Thus this layer is not simply a surface pellicular layer so-called skin with negligible thickness formed according to some methods of the prior art.

While calibrating or dimensioning the tubular shape on the mandrel, the tubular extruding from the extruder is carried to the desired final dimensions and it also undergoes a longitudinal and transversal draw.

In the present invention, the mandrel and extrusion opening dimensions are regulated so as to have a ratio of 4,3 to 4,4 between the relevant diameters, i.e. a ratio being balanced and essentially critical between higher values around 4,8 mostly in use in the known technique and lower values around 4,1. In such a way the draw implies only deformation of the already open cells and allows to complete perforation, optionally with help of the inert material and of still closed cells present inside the tubular. On the contrary, in the external part of the tubular, cells stay close also after the draw because they keep walls very thick and so the inert material is not able to perforate them.

The expanded polystyrene sheet according to the invention method is suitable to be used for producing food product trays thanks to its excellent capacity of absorbing liquids released by said food products in its deformed and open cells portion.

Although the expanded polystyrene sheet has fairly good mechanical resistance properties so as to let it to be used as such for producing trays, it is preferable to couple a plastic material film on a surface of said sheet in order to improve mechanical resistance. Preferably, the film plastic material is of compact polystyrene.

Generally, the surface of the expanded polystyrene sheet to be coupled with the plastic material film is that of the deformed and open cells portion.

This coupling, if necessary, is preferably carried out by flat-head extrusion and in-line lamination and it produces a composite sheet.

In the method according to the invention, the expanded polystyrene sheet or the composite sheet is wounded in coils and left to rest for a seasoning period comprised between one day and four weeks, according to its width, its thickness, the polystyrene density, the coil diameter and the tension among sheet spires in the coils.

While seasoning, the expanded polystyrene of the sheet undergoes cooling down towards room temperature, and also gas inside cells cools down.

Thanks to decreasing temperature the gas inside the cells partly melts in the polystyrene, thus decreasing internal pressure.

As polystyrene is permeable to gases, during seasoning, air slowly enters cells until internal and external partial pressures achieve balance.

The present invention also relates to a tray for food products which can release liquids obtainable from the composite expanded polystyrene sheet as above described. The structural characteristics of this tray are described in claim 12.

The method for producing this tray is of the conventional type and implies the common operations of heating and thermoforming of the compound sheet.

Generally, before going on with these operations, the compound sheet has already undergone perforation (before or after seasoning) at the closed cells surface portion of the expanded polystyrene, such a portion being then faced inward the sheet. Alternatively, perforation can also be carried out on the tray obtained after thermoforming of the composite sheet.

The holes are made so as to extend at least in a part of the deformed and open cells portion and inside the final tray they allow the liquid released by the food product going through them to reach the deformed and open cell portion and to be held back inside said open cells.

The composite sheet heating is carried out at temperatures between 120 and 180°C and allows the composite sheet to be formed through deep-drawing in proper moulds.

Further characteristics and advantages of the present invention will become apparent from the following description of some embodiments thereof, given by way of non-limitative example with reference to the accompanying drawings.

### Brief description of the drawings

In the figures:
- figure 1 is a schematic view of an equipment of the method for producing an expanded polystyrene sheet according to the invention;
- figure 2 is an enlarged view of a detail of the equipment of figure 1;
- figure 3 is a further enlarged view of a portion of the detail of figure 2;
- figure 4 is a cross-section enlarged view of a tray for food products which can release liquids according to the invention;
- figure 5 is a view through electronic microscope being enlarged around 60 times of a detail of the tray of figure 4.

### Detailed description

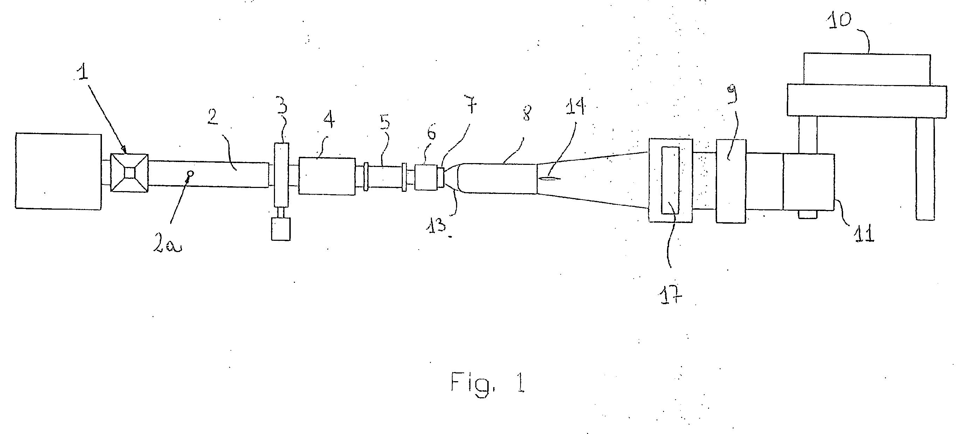

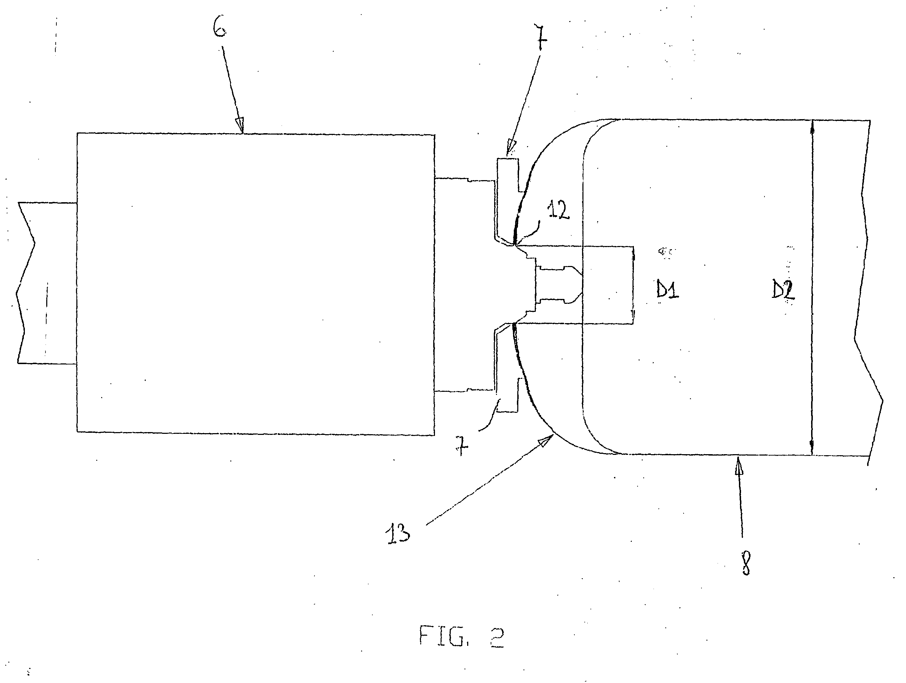

With reference to the figures 1 and 2, the equipment for producing an expanded polystyrene sheet according to the invention comprises an extruder 2 provided with hopper 1 for loading a mixture comprising polystyrene and other additives and with an opening 2a for entrance of the expanding agent. The extruder 2 is also conventionally provided with a filter changer 3 and a heat exchanger 4, with a static mixer 5 and an extrusion head 6.

The equipment also comprises downstream the extruder head 6, a cooling down ring 7, a mandrel 8 for calibrating an extruded polystyrene tubular 13, a cutting station 14 of the tubular 13 so as to form an expanded polystyrene sheet, a station 17 for applying a compact material film on a sheet surface, draw rollers 9, and a winder 10 for forming a coil 11 of an expanded polystyrene sheet.

Rollers 9 allow the polystyrene tubular 13 to move forward after extrusion and are also used as density regulators because when the draw speed increases the weight for each surface unit of the final expanded polystyrene sheet decreases.

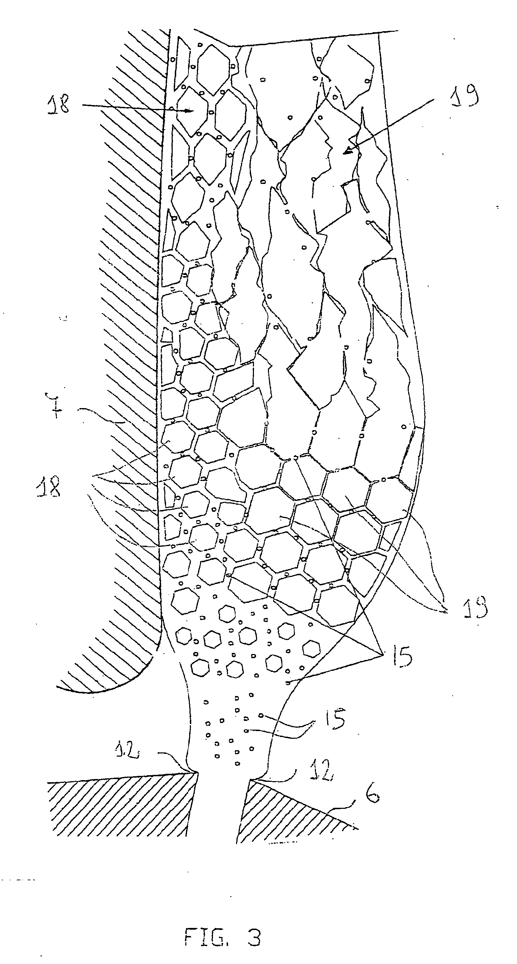

Now, with reference to figures 2 and 3, the extrusion head 6 is provided with an opening 12 in the shape of a circular crown from which the tube-shaped 13 polystyrene is extruded.

Immediately after the extrusion and when the polystyrene expansion has begun, the tubular 13 is held open by keeping under pressure and assuring air exchange in the room that is formed between the extruded tubular and the mandrel front so as to avoid an exaggerated heating of the extruded material and accumulation of expanding gas, and comes into contact with the cooling down ring 7.

The cooling down ring 7 is concentrically placed at the opening 12 and is kept at constant temperature between 20 and 40°C through water, coming from a thermostatic unit, flowing therein.

So, the tubular 13 reaches the mandrel 8 for calibration and it slides thereon by means of draw rollers 9. Advantageously, according to the present invention, the extrusion opening has a diameter D1, the mandrel has a diameter D2 and the ratio D1/D2 is between 4,3 and 4,4.

As shown in figure 3, the tubular 13 of the polystyrene outgoing from the extrusion opening 12 has dispersed particles of inert material 15.

So the expanding gas forms a high quantity of bubbles that dilate until they form a foam with closed, polyhedral-shaped cells 18.

Before completing expansion, the external surface of the polystyrene tubular 13 comes into contact with the cooling down ring 7 so that at the tubular 13 external part the cell growth is inhibited by the increased viscosity of the material. Therefore cells 18 will be formed on the external part of the tubular with inferior dimension and thicker walls with respect to the cells 19 formed inside the tubular, the latter cells being instead free to expand.

So, in the external part of the tubular shape, the dimension of the inert material 15 are inferior than the wall thickness of cells 18, thus not being able to perforate them.

Differently, inside the tubular shape, the dimensions of the inert material 15 are bigger than the cell 19 walls, thus provoking their perforation.

The tubular 13 then undergoes drawing till calibration, so cells 19, already open, are also deformed whereas cells 18 of the external part stay closed because they still maintain a relatively high thickness on the cell walls.

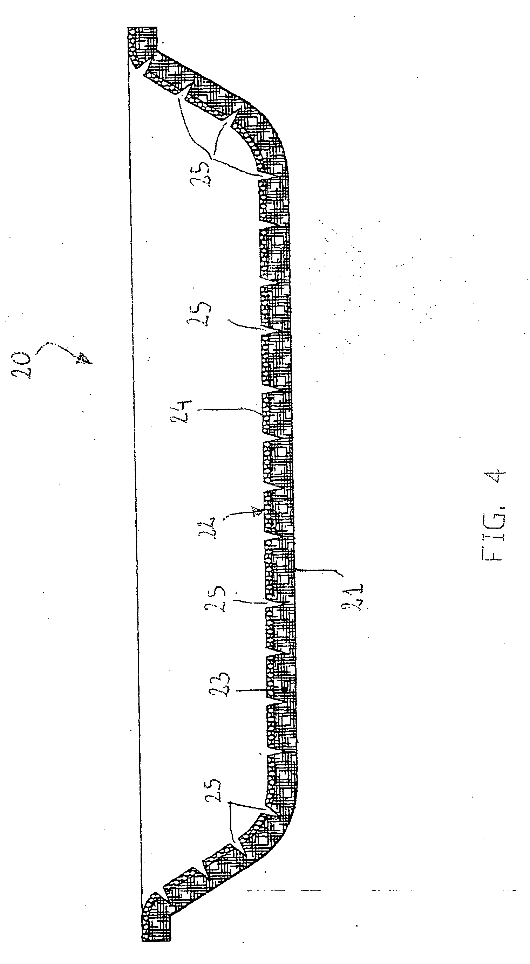

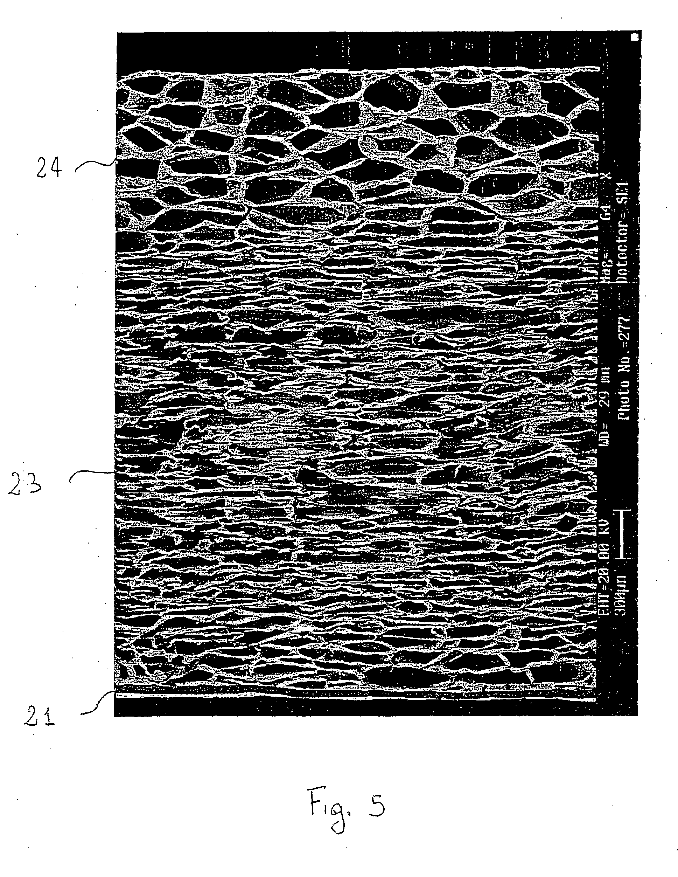

Now, with reference to figures 4 and 5 a tray for food products which can release liquids, according to the invention, is described and generally indicated with 20.

The tray 20 is made of a compact polystyrene external film 21 and of an expanded polystyrene internal layer 22. The structure of the expanded polystyrene internal layer 22 is made of a portion 24 faced inward the tray having closed cells and a remaining portion 23 of major thickness having deformed and open cells.

The tray 20 also has a plurality of holes 25 made in the closed cell portion 24 that extend in part of the thickness of the deformed and open cells portion 23.

These holes 25 conveniently allow the liquids released by the food product lying on the bottom of the tray 20 to reach the portion 23 and then to be absorbed in the deformed and open cells.

The tray 20 structure is better understood thanks to figure 5 in which a photograph, taken with electronic microscope and enlarged 60 times a portion of it, is shown. From the external to the internal part of the tray 20 (i.e. from the bottom to the top in figure 5) the compact polystyrene film 21 whose thickness is of around 0,05 mm, a portion 23 whose thickness is of around 3 mm having deformed, open cells and a portion 24 whose thickness is of around 1 mm having polyhedral closed cells, can be seen.

The main advantage of the present invention is that the expanded polystyrene sheet and the tray thereof made have a good capacity of absorbing the liquids released by food products in the deformed and open cells portion.

A further advantage of the present invention is that the closed cell portion of the expanded polystyrene sheet and of the tray thereof made prevent the liquid from being seen from the surface. Moreover, said closed cell portion advantageously contributes to the recovery of part of the mechanical resistance lost by the open cells portion.

### EXAMPLE 1

100 kg of polystyrene having a Melt Flow Index of 1,2 g/10 min. were mixed with 0,450 kg of a mixture of calcium bicarbonate and citric acid (nucleating agent), with 1,100 kg of glass microspheres having average particle size of 20 micron and with 2,5 kg of an anti-static master batch formed with 50% of polystyrene and 50% of sodium alkyl (C₁₀-C₁₈) sulphonate (surfactant).

The mixture thus obtained was continually supplied inside an extruder 2 with screws whose diameter were 114 mm in the first part, 109 mm in the middle part and 104 mm in the final part, and whose total length were 2350 mm.

3,9 kg of n-butane (67%), isobutane (30%) and propane mixture (expanding agents) was continuously added to the mixture of the previously referred components, which mixture had been already melted and amalgamated in the first section of the extruder, and the mixture thus obtained underwent extrusion (head pressure 95 bar) through a circular die having diameter of 64,5 mm and opening of 1 mm.

The operating conditions of the extruder were the following:

| | |
|---|---|
| Melting zone temperature: | 260°C |
| First cooling down zone temperature: | 145°C |
| Second cooling down zone temperature: | 142°C |
| Filter changer temperature: | 145°C |
| Heat exchanger temperature: | 145°C |
| Static mixer temperature: | 145°C |
| Die temperature: | 125°C |
| Screw rotation speed: | 25 rotation/minute |
| Hour production: | 150kg/h |
| Injected expander: | 3,9% by weight on the polystyrene weight |

The cylindrical, tubular-shaped body of expanded polystyrene outgoing from the extruder underwent cooling down on the external side through contact with a cooling down ring 7 concentrically arranged at the extruder opening 2 and kept at a constant temperature of 35°C by means of water coming from a thermostatic unit.

At the same time, the expanded polystyrene tubular was kept open and was carried to a mandrel for calibration. The mandrel has an axial length of 800 mm and a diameter of 278 mm (ratio mandrel diameter/extruder opening diameter equal to 4,31).

So, the expanded polystyrene tubular was forwarded on the mandrel through drawing by means of rollers and it underwent cutting operations, coupling with a compact polystyrene film whose thickness was of 0,05 mm at the deformed, open cell portion, perforation and winding in coil.

An expanded polystyrene composite sheet, that had weight of 280 g/m², thickness of 5 mm and density of 56 g/l, was thus obtained.

This expanded polystyrene composite sheet capacity of absorbing liquids was equal to 1200 g/m².

After seasoning at room temperature for 5 days, the expanded polystyrene composite sheet was unrolled by the coil, heated inside an oven at a temperature of 140°C for 10 seconds and thermoformed in a proper mould thus obtaining trays whose dimensions were 223 x 182 mm with depth of 21 mm. These trays had a total thickness of 4,5 mm and a closed cell surface portion being 1mm thick.

The capacity of absorbing liquids of these trays was equal to 55 g per tray.

### EXAMPLE 2

An expanded polystyrene composite sheet was produced by using the same operating conditions as in the example 1 except that the extruder opening diameter was equal to 63 mm (ratio mandrel diameter/ extruder opening diameter equal to 4,41).

The expanded polystyrene composite sheet thus obtained had a weight of 280 g/m², thickness of 5mm and density of 56 g/l.

This expanded polystyrene sheet capacity of absorbing liquids was equal to 1500 g/m².

After seasoning at room temperature for 5 days, the expanded polystyrene composite sheet was unrolled by the coil, heated inside an oven at a temperature of 140°C for 10 seconds and thermoformed in a proper mould thus obtaining trays whose dimensions are 223 x 182 mm and depth of 21 mm. These trays had a total thickness of 4,5 cm and a closed cell surface portion having thickness equal to 1mm.

The capacity of absorbing liquids of these trays was equal to 68 g per tray.

## Claims

1. Method for producing an expanded polystyrene sheet for trays containing food products which can release liquids, the method comprising the steps of:
- forming a mixture comprising polystyrene, a nucleating agent and a surfactant,
- homogenising and melting said mixture in an extruder through heating at a temperature higher than 200°C and adding an expanding agent to the homogenised, melted mixture,
- cooling down the mixture at a temperature between 140 and 160°C in an end portion of the extruder,
- extruding the mixture through an opening of the extruder in such a way as to obtain a tubular and start the expansion of the polystyrene,
- calibrating said tubular through sliding thereof on a mandrel,
- cutting said tubular in such a way as to obtain an expanded polystyrene sheet,
**characterized in that** said tubular is cooled down on its external side downstream the extrusion opening and when the expansion of the polystyrene has begun, so forming a surface portion of prefixed thickness having closed cells.

2. Method according to claim 1, **characterised in that** the cooling down of the tubular downstream the extrusion opening is carried out through contact of its external side with a ring-shaped element arranged concentrically with the extrusion opening and kept at a temperature between 20 and 40°C.

3. Method according to claim 2, **characterised in that** during the calibrating step the mandrel dimensions are chosen so that the ratio between the mandrel diameter and the extruder opening diameter is between 4,3 and 4,4.

4. Method according any of the previous claims, in which the mixture further comprises an inert material made of glass microspheres having particle size between 10 and 60 micron.

5. Method according to any of the previous claims, **characterised in that** it further comprises the step of coupling a compact material film on a surface of said expanded polystyrene sheet, thus obtaining a composite sheet.

6. Method according to claim 5, **characterised in that** said coupling is carried out by flat-head extrusion and in-line lamination.

7. Method according to claim 5 or 6, **characterised in that** the compact material forming the film coupled to the expanded polystyrene sheet is polystyrene.

8. Expanded polystyrene sheet for trays containing food products which can release liquids comprising a surface portion having a thickness between 0,7 and 2 mm and a closed cell structure, and a remaining portion of major thickness having a deformed, open cells structure.

9. Expanded polystyrene sheet according to claim 8, **characterised in that** it can be obtained through a method according to any of the claims 1 to 4.

10. Composite sheet for trays containing food products which can release liquids comprising an expanded polystyrene layer coupled, in its inferior part, to a compact material film, the expanded polystyrene layer comprising an upper surface portion having a thickness between 0,7 and 2 mm and a closed cell structure, and a remaining lower portion of major thickness having a deformed, open cells structure.

11. Composite sheet according to claim 10, **characterised in that** it can be obtained through a method according to any of the claims 5 to 7.

12. Tray for food products which can release liquids comprising a film faced outward made of a compact material and a layer made of an expanded polystyrene sheet having holes or slots on at least one part of the surface faced inward, the expanded polystyrene sheet comprising a surface portion inward faced having a thickness between 0,7 and 2mm and a closed cell structure, and a remaining portion of major thickness having a deformed, open cell structure.

## Patentansprüche

1. Verfahren zur Herstellung eines geschäumten Polystyrolblattes für Lebensmittelprodukte beinhaltende Schalen, die Flüssigkeiten abgeben können, umfassend die Schritte:
- Ausbilden einer Mischung umfassend Polystyrol, einen Keimbildner und einen oberflächenaktiven Stoff,
- Homogenisieren und Schmelzen der Mischung in einem Extruder durch Erwärmen auf eine Temperatur höher als 200°C und Hinzufügen eines Treibmittels zu der homogenisierten, geschmolzenen Mischung,
- Abkühlen der Mischung auf eine Temperatur zwischen 140 und 160°C in einem Endbereich des Extruders,
- Extrudieren der Mischung durch eine Öffnung des Extruders derart, um eine Schlauchform zu erhalten und die Expansion des Polystyrols zu beginnen,
- Kalibrieren der Schlauchform durch deren Aufschieben auf einen Ziehdorn,
- Schneiden der Schlauchform derart, um ein geschäumtes Polystyrolblatt zu erhalten,
**dadurch gekennzeichnet, dass** die Schlauchform an ihrer äußeren Seite stromabwärts von der Extrusionsöffnung abgekühlt wird und, sobald die Expansion des Polystyrols begonnen hat, so einen Oberflächenbereich mit vorbestimmter Dicke mit geschlossenen Zellen ausbildet.

2. Verfahren nach Anspruch 1, **dadurch gekennzeichnet, dass** das Abkühlen der Schlauchform stromabwärts der Extrusionsöffnung durch Kontakt ihrer Außenseite mit einem ringförmigen Element durchgeführt wird, das konzentrisch zu der Extrusionsöffnung angeordnet ist und bei einer Temperatur zwischen 20 und 40°C gehalten wird.

3. Verfahren nach Anspruch 2, **dadurch gekennzeichnet, dass** in dem Kalibrationsschritt die Ausmaße des Ziehdorns derart gewählt werden, dass das Verhältnis zwischen dem Ziehdorndurchmesser und dem Extruderöffnungsdurchmesser zwischen 4,3 und 4,4 liegt.

4. Verfahren nach einem der vorhergehenden Ansprüche, in welchem die Mischung ferner ein inertes Material aus Glasmikrokugeln umfasst, die eine Teilchengröße zwischen 10 und 60 Mikrometer besitzen.

5. Verfahren nach einem der vorhergehenden Ansprüche, **dadurch gekennzeichnet, dass** es ferner den Schritt des Verbindens einer kompakten Materialfolie auf eine Oberfläche des geschäumten Polystyrolblattes umfasst, wodurch ein Kompositblatt erhalten wird.

6. Verfahren nach Anspruch 5, **dadurch gekennzeichnet, dass** das Verbinden durch eine Flachkopfextrusion und eine In-Reihe-Lamination durchgeführt wird.

7. Verfahren nach Anspruch 5 oder 6, **dadurch gekennzeichnet, dass** das kompakte Material, welches die Folie ausbildet, die mit dem geschäumten Polystyrolblatt verbunden ist, Polystyrol ist.

8. Geschäumtes Polystyrolblatt für Lebensmittel beinhaltende Schalen, welche Flüssigkeiten abgeben können, umfassen einen Oberflächenbereich mit einer Dicke zwischen 0,7 und 2 mm und einer geschlossenzelligen Struktur und mit einem verbleibenden Bereich größerer Dicke mit einer deformierten, offenzelligen Struktur.

9. Geschäumtes Polystyrolblatt nach Anspruch 8, **dadurch gekennzeichnet, dass** es mit einem Verfahren nach einem der Ansprüche 1 bis 4 erhalten werden kann.

10. Kompositblatt für Lebensmittel beinhaltende Schalen, die Flüssigkeiten abgeben können, umfassend eine geschäumte Polystyrolschicht, die in ihrem tiefer gelegenen Bereich mit einer kompakten Materialfolie verbunden ist, wobei die geschäumte Polystyrolschicht einen oberen Oberflächenbereich mit einer Dicke zwischen 0,7 und 2 mm und einer geschlossenzelligen Struktur umfasst, und einen verbleibenden unteren Bereich mit größerer Dicke mit einer deformierten offenzelligen Struktur.

11. Kompositblatt nach Anspruch 10, **dadurch gekennzeichnet, dass** es nach einem Verfahren nach einem der Ansprüche 5 bis 7 erhältlich ist.

12. Schale für Lebensmittelprodukte, die Flüssigkeiten abgeben können, umfassend eine nach außen gerichtete Folie, die aus einem kompakten Material hergestellt ist, und eine Schicht, die aus einem geschäumten Polystyrolblatt mit Löchern oder Schlitzen in mindestens einem Bereich ihrer nach innen gerichteten Oberfläche hergestellt ist, wobei das geschäumte Polystyrolblatt einen nach innen gerichteten Oberflächenbereich mit einer Dicke zwischen 0,7 und 2 mm und einer geschlossenzelligen Struktur umfasst, und einen verbleibenden Bereich größerer Dicke mit einer deformierten offenzelligen Struktur.

## Revendications

1. Procédé de production d'une feuille de polystyrène expansé pour des plateaux contenant des produits alimentaires susceptibles de libérer des liquides, le procédé comprenant les étapes consistant :
- à former un mélange contenant du polystyrène, un agent de nucléation et un tensio-actif,
- à homogénéiser et faire fondre ledit mélange dans une extrudeuse, par chauffage à une température supérieure à 200 °C, et à ajouter un agent d'expansion au mélange fondu homogénéisé,
- à refroidir le mélange à une température comprise entre 140 et 160 °C dans une partie terminale de l'extrudeuse,
- à extruder le mélange à travers une ouverture de l'extrudeuse de façon à obtenir un tube, et à démarrer l'expansion du polystyrène,
- à étalonner ledit tube en le faisant glisser sur un mandrin,
- à découper ledit tube de façon à obtenir une feuille de polystyrène expansé,
**caractérisé en ce que** ledit tube est refroidi sur sa face externe, en aval de l'ouverture d'extrusion, et quand l'expansion du polystyrène a commencé, de façon à former une partie superficielle, d'épaisseur prédéfinie, ayant des alvéoles fermés.

2. Procédé selon la revendication 1, **caractérisé en ce que** le refroidissement du tube en aval de l'ouverture d'extrusion est mis en oeuvre par contact de sa face externe avec un élément annulaire disposé d'une manière concentrique avec l'ouverture d'extrusion et maintenu à une température comprise entre 20 et 40 °C.

3. Procédé selon la revendication 2, **caractérisé en ce que**, pendant l'étape d'étalonnage, les dimensions du mandrin sont choisies de façon que le rapport entre le diamètre du mandrin et le diamètre de l'ouverture de l'extrudeuse soit compris entre 4,3 et 4,4.

4. Procédé selon l'une quelconque des revendications précédentes, dans lequel le mélange comprend en outre un matériau inerte constitué de microsphères de verre ayant une granulométrie comprise entre 10 et 60 micromètres.

5. Procédé selon l'une quelconque des revendications précédentes, **caractérisé en ce qu'**il comprend l'étape consistant à coupler un film en un matériau compact sur une surface de ladite feuille de polystyrène expansé, pour obtenir une feuille composite.

6. Procédé selon la revendication 5, **caractérisé en ce que** ledit couplage est mis en oeuvre par extrusion à la filière plate et stratification en ligne.

7. Procédé selon la revendication 5 ou 6, **caractérisé en ce que** le matériau compact formant le film couplé à la feuille de polystyrène expansé est le polystyrène.

8. Feuille de polystyrène expansé pour plateaux contenant des produits alimentaires susceptibles de libérer des liquides, comprenant une partie superficielle ayant une épaisseur comprise entre 0,7 et 2 mm et une structure d'alvéoles fermés et une partie restante ayant une épaisseur plus grande, ayant une structure déformée à alvéoles ouverts.

9. Feuille de polystyrène expansé selon la revendication 8, **caractérisée en ce qu'**on peut l'obtenir par un procédé selon l'une quelconque des revendications 1 à 4.

10. Feuille composite pour plateaux contenant des produits alimentaires susceptibles de libérer des liquides, comprenant une couche de polystyrène expansé qui est couplée dans sa partie inférieure à un film en un matériau compact, la couche de polystyrène expansé comprenant une partie superficielle supérieure ayant une épaisseur comprise entre 0,7 et 2 mm et une structure à alvéoles fermés, et une partie inférieure restante, ayant une épaisseur plus grande et une structure déformée à alvéoles ouverts.

11. Feuille composite selon la revendication 10, **caractérisée en ce qu'**on peut l'obtenir par un procédé selon l'une quelconque des revendications 5 à 7.

12. Plateau pour produits alimentaires susceptibles de libérer des liquides, comprenant un film dirigé vers l'extérieur, constitué d'un matériau compact, et une couche constituée d'une feuille de polystyrène expansé ayant des trous ou des fentes sur au moins une partie de la surface dirigée vers l'intérieur, la feuille de polystyrène expansé comprenant une partie superficielle dirigée vers l'intérieur, ayant une épaisseur comprise entre 0,7 et 2 mm et une structure à alvéoles fermés, et une partie restante, ayant une épaisseur plus grande, et ayant une structure déformée à alvéoles ouverts.
